# NOUVEAU FASCICULE DE BREVET EUROPEEN

(11) **EP 0 917 519 B2**
(45) Date de publication et mention de la décision concernant l'opposition: **21.08.2013**
(45) Mention de la délivrance du brevet: 09.07.2003
(21) Numéro de dépôt: 98925723.3
(22) Date de dépôt: 15.05.1998
(51) Int. Cl.: C01B 33/193

(54) **SILICE PRECIPITEE UTILISABLE COMME CHARGE RENFORCANTE POUR ELASTOMERES**
FÄLLUNGSKIESELSÄURE VERWENDBAR ALS VERSTÄRKENDER FÜLLSTOFF IN ELASTOMEREN
FÄLLUNGSKIESELSÄURE

(30) Priorité: 26.05.1997 FR 9706369
(43) Date de publication de la demande: 26.05.1999
(73) Titulaire: RHODIA CHIMIE, 92408 Courbevoie Cédex (FR)
(72) Inventeur: CHEVALLIER, Yvonnick, F-69270 Fontaines Saint-Martin (FR); COCHET, Philippe, F-69009 Lyon (FR); FOURRE, Patrick, F-69009 Lyon (FR)
(74) Mandataire: Delenne, Marc
(86) Numéro de dépôt international: PCT/FR1998/000975
(87) Numéro de publication internationale: WO 1998/054090

(56) Documents cités:
- EP-A- 0 157 703
- EP-A- 0 396 450
- EP-A- 0 520 862
- WO-A-96/35639

## Description

La présente invention concerne des silices précipitées se présentant en particulier sous forme de poudre, de billes sensiblement sphériques ou de granulés, et leur application au renforcement des élastomères.

On sait que la silice précipitée est utilisée depuis longtemps comme charge blanche renforçante dans les élastomères.

Cependant, comme toute charge renforçante, il convient qu'elle puisse se manipuler d'une part, et surtout s'incorporer d'autre part, facilement dans les mélanges.

On sait, d'une manière générale, que pour obtenir les propriétés de renforcement optimales conférées par une charge, il convient que cette demière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère (incorporabilité de la charge) et à se désagréger ou se désagglomérer sous la forme d'une poudre très fine (désagrégation de la charge), et où, d'autre part, la poudre issue du processus de désagrégation précité peut elle-même, à son tour, se disperser parfaitement et de façon homogène dans l'élastomère (dispersion de la poudre).

De plus, pour des raisons d'affinités réciproques, les particules de silice ont une fâcheuse tendance, dans la matrice élastomère, à s'agglomérer entre elles. Ces interactions silice/silice ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues (ce nombre théorique d'interactions silice/élastomère étant, comme cela est bien connu, directement proportionnel à la surface exteme, de la silice utilisée).

En outre, de telles interactions silice/silice tendent, à l'état cru, à augmenter la raideur et la consistance des mélanges, rendant ainsi leur mise en oeuvre plus difficile.

Ces inconvénients se rencontrent en particulier dans le cas des silices de surface spécifique relativement élevée, qui, de plus, ne présentent généralement pas de très bonnes propriétés renforçantes.

Le problème se pose de disposer de charges qui, tout en possédant une surface spécifique relativement élevée, présentent une aptitude à la dispersion (dispersibilité) dans les élastomères satisfaisante et de bonnes propriétés renforçantes.

La présente invention a pour but d'éviter les inconvénients précités et de résoudre le problème mentionné ci-dessus.

La silice selon l'invention peut être préparée par un procédé de préparation du type comprenant la réaction d'un silicate avec un agent acidifiant ce par quoi l'on obtient une suspension de silice précipitée, puis la séparation et le séchage de cette suspension, caractérisé en ce que :
- on réalise la précipitation de la manière suivante :
   (i) on forme un pied de cuve initial comportant au moins une partie de la quantité totale du silicate engagé dans la réaction et au moins un électrolyte, la concentration en silicate (exprimée en SiO₂) dans ledit pied de cuve initial étant comprise entre 50 et 60 g/l,
   (ii) on ajoute l'agent acidifiant audit pied de cuve jusqu'à l'obtention d'une valeur du pH du milieu réactionnel comprise entre 7 et 8,5,
   (iii) on ajoute au milieu réactionnel de l'agent acidifiant et, le cas échéant, simultanément la quantité restante du silicate,
- la séparation comprend une filtration et un lavage au moyen d'un filtre équipé d'un moyen de compactage,
- on sèche par atomisation une suspension présentant un taux de matière sèche inférieure à 17 % en poids.

Une certaine concentration en silicate, relativement faible, exprimée en SiO₂ dans le pied de cuve initial, combinée à l'utilisation d'un filtre équipé d'un moyen de compactage, de préférence à une faible pression de compactage, et à un taux approprié de matière sèche de la suspension à sécher constituent des conditions importantes pour conférer aux produits obtenus leurs bonnes propriétés.

Il est à noter, d'une manière générale, que le procédé concerné est un procédé de synthèse de silice de précipitation, c'est-à-dire que l'on fait agir, dans des conditions particulières, un agent acidifiant sur un silicate.

Le choix de l'agent acidifiant et du silicate se fait d'une manière bien connue en soi.

On peut rappeler que l'on utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 8 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration exprimée en silice comprise entre 40 et 330 g/l, par exemple entre 60 et 300 g/l, en particulier entre 60 et 250 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral SiO₂/Na₂O compris entre 2 et 4, par exemple entre 3,0 et 3,7.

La précipitation se fait d'une manière spécifique selon les étapes suivantes.

On forme tout d'abord un pied de cuve qui comprend du silicate ainsi qu'un électrolyte (étape (i)). La quantité de silicate présente dans le pied de cuve initial ne représente avantageusement qu'une partie de la quantité totale de silicate engagée dans la réaction.

La concentration en silicate dans le pied de cuve initial est comprise entre 50 et 60 g de SiO₂ par litre. De préférence, cette concentration est comprise entre 55 et 60 g/l.

Le pied de cuve initial comprend un électrolyte. Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

Si l'électrolyte employé est du sulfate de sodium, sa concentration dans le pied de cuve initial est, de préférence, entre 12 et 20 g/l, en particulier entre 15 et 20 g/l.

La deuxième étape consiste à ajouter l'agent acidifiant dans le pied de cuve de composition décrite plus haut (étape (ii)).

Cette addition qui entraîne une baisse corrélative du pH du milieu réactionnel se fait jusqu'à ce qu'on atteigne une valeur du pH comprise entre 7 et 8,5; notamment entre 7 et 8, par exemple entre 7,5 et 8.

Une fois qu'est atteinte la valeur souhaitée de pH, on procède alors à la troisième étape (étape (iii)).

Dans le cas (préféré) d'un pied de cuve de départ ne comprenant qu'une partie de la quantité totale de silicate engagé dans la réaction, on procède, dans l'étape (iii), à une addition simultanée d'agent acidifiant et de la quantité restante de silicate.

Cette addition simultanée est de préférence réalisée de manière telle que la valeur du pH soit constamment égale (à +/- 0,2 près) à celle atteinte à l'issue de l'étape (ii).

En général, dans une étape suivante, on ajoute au milieu réactionnel une quantité supplémentaire d'agent acidifiant, de préférence jusqu'à l'obtention d'une valeur du pH du milieu réactionnel comprise entre 4 et 6, en particulier entre 4,5 et 5,5.

Il peut être alors avantageux d'effectuer, après cette addition d'une quantité supplémentaire d'agent acidifiant, un mûrissement du milieu réactionnel, ce mûrissement pouvant par exemple durer de 1 à 30 minutes, notamment de 2 à 15 minutes.

Dans le cas d'un pied de cuve de départ comprenant la quantité totale du silicate engagé dans la réaction, on procède, dans l'étape (iii), à une addition d'agent acidifiant, de préférence jusqu'à l'obtention d'une valeur du pH du milieu réactionnel comprise entre 4 et 6, en particulier entre 4,5 et 5,5.

Il peut être également alors avantageux d'effectuer, après cette étape (iii), un mûrissement du milieu réactionnel, ce mûrissement pouvant par exemple durer de 1 à 30 minutes, notamment de 2 à 15 minutes.

La température du milieu réactionnel est généralement comprise entre 68 et 98 °C.

Selon une variante de l'invention, la réaction est effectuée à une température constante, de préférence comprise entre 75 et 95 °C.

Selon une autre variante (préférée), la température de fin de réaction est plus élevée que la température de début de réaction : ainsi, on maintient la température au début de la réaction de préférence entre 68 et 80 °C, puis on augmente la température, de préférence jusqu'à une valeur comprise entre 80 et 98 °C, valeur à laquelle elle est maintenue jusqu'à la fin de la réaction.

On obtient, à l'issue des étapes qui viennent d'être décrites, une bouillie de silice qui est ensuite séparée (séparation liquide-solide).

Selon une autre caractéristique essentielle du procédé de préparation, ladite séparation comprend une filtration et un lavage à raide d'un filtre équipé d'un moyen de compactage, la pression de compactage étant de préférence faible.

Ce filtre peut être un filtre à bande équipé d'un rouleau assurant le compactage.

Néanmoins, de préférence, la séparation comprend une filtration, un lavage puis un compactage, au moyen d'un filtre presse ; en général, la pression en fin de filtration est comprise entre 3,5 et 6,0 bars, par exemple entre 3,8 et 4,5 bars ; de manière très avantageuse, ledit compactage est effectué par introduction d'air à une pression inférieure à 4,5 bars, en particulier comprise entre 3,8 et 4,3 bars, pendant 20 à 40 secondes, par exemple pendant environ 30 secondes.

La suspension de silice précipitée ainsi récupérée (gâteau de filtration) est ensuite séchée par atomisation.

Selon une caractéristique du procédé de préparation, cette suspension doit présenter immédiatement avant son séchage par atomisation un taux de matière sèche inférieure à 17 % en poids. Ce taux de matière sèche est de préférence compris entre 14,5 et 16,5 % en poids.

Il est à noter que l'on peut en outre, après la filtration, à une étape ultérieure du procédé, rajouter au gâteau de filtration de la matière sèche, par exemple de la silice conforme à l'invention sous forme pulvérulente.

Le séchage peut être mis en oeuvre au moyen de tout type d'atomiseur convenable, notamment un atomiseur à turbine, à buses, à pression liquide ou à deux fluides.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée par passage du gâteau dans un broyeur de type colloïdal ou à bille. Le délitage est généralement effectué en présence d'un composé de l'aluminium, en particulier d'aluminate de sodium et, de préférence, en présence d'un agent acidifiant tel que décrit précédemment (dans ce dernier cas, le composé de l'aluminium et l'agent acidifiant sont avantageusement ajoutés de manière simultanée). L'opération de délitage permet notamment d'abaisser la viscosité de la suspension à sécher ultérieurement.

Selon un mode préféré de réalisation, le séchage est effectué à l'aide d'un atomiseur à buses. La silice précipitée susceptible d'être alors obtenue se présente avantageusement sous forme de billes sensiblement sphériques, de préférence d'une taille moyenne d'au moins 80 µm, par exemple d'au moins 100 µm.

A l'issue du séchage, on peut procéder à une étape de broyage sur le produit récupéré. La silice précipitée qui est alors susceptible d'être obtenue se présente généralement sous forme d'une poudre, de préférence de taille moyenne d'au moins 15 µm, en particulier comprise entre 15 et 60 µm, par exemple entre 20 et 45 µm.

Les produits broyés à la granulométrie désirée peuvent être séparés des éventuels produits non conformes au moyen par exemple de tamis vibreurs présentant des tailles de maille appropriées, et les produits non conformes ainsi récupérés être renvoyés au broyage.

De même, selon un autre mode de réalisation, le séchage est effectué à l'aide d'un atomiseur à turbine. La silice précipitée susceptible d'être alors obtenue peut se présenter sous la forme d'une poudre, de préférence de taille moyenne d'au moins 15 µm, en particulier comprise entre 30 et 150 µm, par exemple ente 45 et 120 µm.

Enfin, le produit séché (notamment par un atomiseur à turbines) ou broyé tel qu'indiqué précédemment peut, selon un autre mode de réalisation, être soumis à une étape d'agglomération.

On entend ici par agglomération tout procédé qui permet de lier entre eux des objets finement divisés pour les amener sous la forme d'objets de plus grande taille et résistant mieux mécaniquement.

Ces procédés sont notamment la compression directe, la granulation voie humide (c'est-à-dire avec utilisation d'un liant tel que eau, slurry de silice, ...), l'extrusion et, de préférence, le compactage à sec.

Lorsque l'on met en oeuvre cette dernière technique, il peut s'avérer avantageux, avant de procéder au compactage, de désaérer (opération aussi appelée pré-densification ou dégazage) les produits pulvérulents de manière à éliminer l'air inclus dans ceux-ci et assurer un compactage plus régulier.

La silice précipitée susceptible d'être obtenue selon ce mode de réalisation se présente avantageusement sous la forme de granulés, de préférence de taille d'au moins 1 mm, en particulier comprise entre 1 et 10 mm.

A l'issue de l'étape d'agglomération, les produits peuvent être calibrés à une taille désirée, par exemple par tamisage, puis conditionnés pour leur utilisation future.

Les poudres, de même que les billes, de silice précipitée obtenues par le procédé offrent ainsi l'avantage, entre autre, d'accéder de manière simple, efficace et économique à des granulés tels que précités, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

Un objet de l'invention consiste en de nouvelles silices précipitées qui, tout en ayant une surface spécifique élevée, présentent quand même une aptitude à la dispersion (dispersibilité) satisfaisante et de bonnes propriétés renforçantes, en particulier qui, utilisées à titre de charge renforçante pour élastomères, confère à ces derniers de bonnes propriétés rhéologiques et mécaniques.

Dans l'exposé qui suit, la surface spécifique BET est déterminée selon la méthode de BRUNAUER - EMMET - TELLER décrite dans "The journal of the American Chemical Society", Vol. 60, page 309, février 1938 et correspondant à la norme NF T 45007 (novembre 1987).

La surface spécifique CTAB est la surface exteme déterminée selon la norme NF T 45007 (novembre 1987) (5.12).

La prise d'huile DOP est déterminée selon la norme NF T 30-022 (mars 1953) en mettant en oeuvre le dioctylphtalate.

La densité de remplissage à l'état tassé (DRT) est mesurée selon la norme NF T 30-042.

Le pH est mesuré selon la norme ISO 787/9 (pH d'une suspension à 5 % dans l'eau).

Les volumes poreux donnés sont mesurés par porosimétrie au mercure ; la préparation de chaque échantillon se fait comme suit : chaque échantillon est préalablement séché pendant 2 heures en étuve à 200 °C, puis placé dans un récipient à essai dans les 5 minutes suivant sa sortie de l'étuve et dégazé sous vide, par exemple à l'aide d'une pompe à tiroirs rotatifs ; les diamètres de pores sont calculés par la relation de WASHBURN avec un angle de contact théta égal à 140° et une tension superficielle gamma égale à 484 Dynes/cm (porosimètre MICROMERITICS 9300).

L'indice de finesse (I.F.) représente le rayon médian des pores intra-agrégats, c'est-à-dire le rayon des pores auquel correspond la surface de pores S₀/2 mesurée par porosimétrie au mercure (S₀ est la surface apportée par tous les pores dont le diamètre est supérieur ou égal à 100 Å).

L'aptitude à la dispersion (dispersibilté) des silices selon l'invention est quantifiée à l'aide de la mesure du taux de fines (τ_{f}), c'est-à-dire de la proportion (en poids) de particules de taille inférieure à 0,3 µm, après désagglomération aux ultra-sons, effectuée selon le test de dispersibilité décrit ci-après.

Dans ce test, on mesure l'aptitude à la dispersion de la silice par une mesure granulométrique (par sédimentation), effectuée sur une suspension de silice préalablement désagglomérée par ultra-sonification. La désagglomération (ou dispersion) sous ultra-sons est mise en oeuvre à l'aide d'un sonificateur VIBRACELL BIOBLOCK (600 W), équipé d'une sonde de diamètre 19 mm. La mesure granulométrique est effectuée à l'aide d'un granulomètre SEDIGRAPH (sédimentation dans le champ de gravité + balayage par faisceau de rayons X).

On pèse dans un pilulier (de volume égal à 75 ml) 4 grammes de silice et l'on complète à 50 grammes par ajout d'eau permutée : on réalise ainsi une suspension aqueuse à 8 % de silice qui est homogénéisée pendant 2 minutes par agitation magnétique. On procède ensuite à la désagglomération (dispersion) sous ultra-sons comme suit : la sonde étant immergée sur une longueur de 4 cm, on règle la puissance de sortie de manière à obtenir une déviation de l'aiguille de puissance indiquant 20 %. La désagglomération est effectuée pendant 210 secondes.

On réalise ensuite la mesure granulométrique au moyen d'un granulomètre SEDIGRAPH. Pour cela, on règle tout d'abord la vitesse de balayage vertical de la cellule par le faisceau de rayons X à 918, ce qui correspond à une taille maximale analysée de 85 µm. On fait circuler de l'eau permutée dans ladite cellule, puis on règle le zéro électrique et le zéro mécanique de l'enregistreur papier (ce réglage se faisant avec le potentiomètre "100 %" de l'enregistreur à la sensibilité maximale). Le crayon de l'enregistreur papier est placé au point représentant la taille de départ de 85 µm. On fait ensuite circuler la suspension de silice désagglomérée, éventuellement refroidie au préalable, dans la cellule du granulomètre SEDIGRAPH (l'analyse granuiométrique s'effectuant à 30 °C) et l'analyse démarre alors. L'analyse s'arrête automatiquement dès que la taille de 0,3 µm est atteinte (environ 45 minutes). On calcule alors le taux de fines (τ_{f}), c'est-à-dire la proportion (en poids) de particules de taille inférieure à 0,3 µm.

Ce taux de fines (τ_{f}), ou taux de particules de taille inférieure à 0,3 µm, est d'autant plus élevé que la silice présente une dispersibilité élevée.

Dans certains cas, l'aptitude à la dispersion (et à la désagglomération) des silices selon l'invention peut être également quantifiée au moyen d'un test spécifique de désagglomération.

Le test de désagglomération est réalisé selon le protocole suivant :
la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 %. La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian ⌀₅₀ que l'on obtient est d'autant plus faible que la silice présente une aptitude à la désagglomération élevée. On détermine également le rapport (10 x volume de suspension introduite (en ml))/densité optique de la suspension détectée par le granulomètre (cette densité optique est de l'ordre de 20). Ce rapport est indicatif du taux de particules de taille inférieure à 0,1 µm qui ne sont pas détectées par le granulomètre. Ce rapport appelé facteur de désagglomération aux ultra-sons (F_{D}) est d'autant plus élevé que la silice présente une aptitude à la désagglomération élevée.

Il est maintenant proposé, selon l'invention, une nouvelle silice précipitée caractérisée en ce qu'elle possède :
- une surface spécifique BET comprise entre 185 et 240 m²/g,
- une surface spécifique CTAB comprise entre 180 et 240 m²/g,
- une distribution poreuse telle que le volume poreux V2 constitué par les pores dont le diamètre est compris entre 175 et 275 Å représente moins de 50 % du volume poreux V1 constitué par les pores de diamètres inférieurs ou égaux à 400 Å,
- un volume poreux (V_{d1}) constitué par les pores de diamètre inférieur à 1 µm supérieur à 1,65 cm³/g,
- un indice de finesse (I.F.) compris entre 70 et 100 Å,
- un taux de fines (τ_{f}), après désagglomération aux ultra-sons, d'au moins 50 %, de préférence d'au moins 55 %.

La silice selon l'invention possède une surface spécifique relativement élevée. Sa surface spécifique BET est comprise entre 185 et 250 m²/g, de préférence entre 195 et 225 m²/g, en particulier entre 200 et 220 m²/g ; sa surface spécifique CTAB est comprise entre 180 et 240 m²/g, de préférence entre 185 et 220 m²/g, en particulier entre 190 et 205 m²/g.

Elle présente en général un rapport surface spécifique BET / surface spécifique CTAB variant entre 1,0 et 1,2, c'est-à-dire une faible microporosité.

Une des caractéristiques de la silice précipitée selon l'invention réside dans la distribution, ou répartition, du volume poreux, et notamment dans la distribution du volume poreux qui est généré par les pores de diamètres inférieurs ou égaux à 400 Å. Ce dernier volume correspond au volume poreux utile des charges qui sont employées dans le renforcement des élastomères. L'analyse des porogrammes montre qu'alors la silice selon l'invention possède une distribution poreuse telle que le volume poreux constitué par les pores dont le diamètre est compris entre 175 et 275 Å représente moins de 50 %, en particulier au plus 45 %, notamment entre 25 et 45 %, du volume poreux constitué par les pores de diamètres inférieurs ou égaux à 400 Å.

La silice selon l'invention présente un volume poreux (V_{d1}) constitué par les pores de diamètre inférieur à 1 µm supérieur à 1,65 cm³/g ; ce volume poreux est, de préférence, d'au moins 1,70 cm³/g, en particulier compris entre 1,70 et 1,80 cm³/g.

De préférence, son volume poreux (V3) constitué par les pores dont le diamètre est compris entre 100 et 300 Å est d'au moins 0,82 cm³/g, en particulier d'au moins 0,85 cm³/g ; il est habituellement d'au moins 0,86 cm³/g.

Elle possède, en général, un volume poreux total (VPT) supérieur à 3,0 cm³/g, par exemple compris entre 3,1 et 3,4 cm³/g.

Son indice de finesse (I.F.) est compris entre 70 et 100 Å, de préférence entre 80 et 100 Å, par exemple entre 82 et 98 Å.

La silice selon l'invention possède ainsi des caractéristiques de porosité particulières.

De plus, et c'est l'une de ces caractéristiques essentielles, elle montre une aptitude à la dispersion très satisfaisante. Ainsi, elle présente un taux de fines (τ_{f}) ou taux de particules de taille inférieure à 0,3 µm, après désagglomération aux ultra-sons, d'au moins 50 %, de préférence d'au moins 55 % ; ce taux peut être, par exemple, d'au moins 60 %.

En général, son facteur de désagglomération aux ultra-sons (F_{D}) est supérieur à 5,5 ml, en particulier supérieur à 9 ml, voire à 13 ml.

La silice selon l'invention peut présenter un diamètre médian (⌀₅₀), après désagglomération aux ultra-sons, inférieur à 8,5 µm, en particulier compris entre 5 et 7 µm.

Le pH de la silice selon l'invention est habituellement compris entre 6,0 et 7,5, notamment entre 6,3 et 6,9.

Sa densité de remplissage à l'état tassé (DRT) est, en général, supérieure à 0,26, en particulier à 0,28 ; elle est par exemple au moins égale à 0,30.

La silice selon l'invention possède une prise d'huile DOP variant, le plus souvent, entre 230 et 330 ml/100g, de préférence entre 240 et 300 ml/100g.

Elle peut se présenter sous forme de poudre, de granulés ou, de manière avantageuse, sous forme de billes sensiblement sphériques.

Les poudres de silice selon l'invention présentent préférentiellement une taille moyenne d'au moins 15 µm ; celle-ci est par exemple comprise entre 15 et 60 µm (notamment entre 20 et 45 µm) ou entre 30 et 150 µm (notamment entre 45 et 120 µm).

Elles permettent d'obtenir un bon compromis mise en oeuvre/propriétés mécaniques à l'état vulcanisé. Elles constituent aussi des précurseurs privilégiés pour la synthèse de granulés tels que mentionnés plus loin.

Les billes sensiblement sphériques selon l'invention présentent préférentiellement une taille moyenne d'au moins 80 µm.

Selon certaines variantes de l'invention, cette taille moyenne des billes est d'au moins 100 µm, par exemple d'au moins 150 µm ; elle est généralement d'au plus 300 µm et se situe de préférence entre 100 et 270 µm. Cette taille moyenne est déterminée selon la norme NF X 11507 (décembre 1970) par tamisage à sec et détermination du diamètre correspondant à un refus cumulé de 50 %.

Une telle silice sous forme de billes sensiblement sphériques, avantageusement pleines, homogènes, peu poussièrantes et de bonne coulabilité, présente une aptitude très satisfaisante à la dispersion et de bonnes propriétés renforçantes. Une telle silice constitue également un précurseur privilégié pour la synthèse des poudres et des granulés selon l'invention.

Une telle silice sous forme de billes sensiblement sphériques constitue une variante très avantageuse de l'invention.

Les dimensions des granulés selon l'invention sont préférentiellement d'au moins 1 mm, en particulier comprises entre 1 et 10 mm, selon l'axe de leur plus grande dimension (longueur).

Lesdits granulés peuvent se présenter sous des formes les plus diverses. A titre d'exemple, on peut notamment citer les formes cylindrique, parallélépipédique, de pastille, de plaquette, d'extrudé à section circulaire ou polylobée.

Les silices selon l'invention, notamment sous forme de poudre, de billes sensiblement sphériques ou de granulés, sont de préférence préparées selon le procédé de préparation conforme à l'invention et décrit précédemment.

Les silices selon l'invention trouvent une application particulièrement intéressante dans le renforcement des élastomères, naturels ou synthétiques. Tout en possédant une surface spécifique assez élevée, elles présentent une aptitude à la dispersion satisfaisante et de bonnes propriétés renforçantes., notamment par rapport aux silices de l'art antérieur ayant une surface identiqueou proche. De plus, elles présentent en général des propriétés renforçantes comparables voire meilleures que celles de silices hautement dispersibles, et ce pour des quantités de silices selon l'invention mises en oeuvre dans l'élastomère plus faibles.

Les exemples suivants illustrent l'invention sans toutefois en limiter la portée.

### EXEMPLE 1 (comparatif)

Dans un réacteur en acier inoxydable muni d'un système d'agitation par hélices et d'un chauffage par double enveloppe, on introduit :
- 333 litres de silicate de sodium aqueux (65 °C), présentant un rapport pondéral SiO₂/Na₂O égal à 3,45 et une densité à 20 °C égal à 1,230
- 667 litres de solution aqueuse (20 °C) contenant 11,2 kg de Na₂SO₄.

La concentration en silicate exprimée en SiO₂ dans le pied de cuve initial est alors de 78 g/l. Le mélange est alors porté à une température de 70 °C tout en le maintenant sous agitation. On y introduit alors, à un débit de 9,2 l/min d'acide sulfurique dilué de densité à 20 °C égale à 1,050 jusqu'à obtenir dans le milieu réactionnel une valeur de pH (mesurée à sa température) égale à 8,0. La température de la réaction est de 70 °C pendant les 25 premières minutes ; elle est ensuite portée de 70 à 94 °C en 10 minutes environ, puis maintenue à 94 °C jusqu'à la fin de la réaction.

On introduit ensuite (c'est-à-dire lorsque le pH du milieu réactionnel a atteint la valeur de 8,0) conjointement dans le milieu réactionnel du silicate de sodium aqueux du type décrit ci-avant, à un débit de 2,5 l/min, et de l'acide sulfurique, également du type décrit ci-avant, à un débit régulé de manière telle que le pH du milieu réactionnel, pendant la période d'introduction, soit constamment égal à 8,0 ± 0,1. Après 40 minutes d'addition simultanée, on arrête l'introduction du silicate de sodium et on continue à introduire de l'acide dilué pendant 10 minutes environ de manière à amener le pH du milieu réactionnel à une valeur égale à 5,2. Après cette introduction d'acide, on maintient la bouillie réactionnelle obtenue pendant 5 minutes sous agitation.

La durée totale de la réaction est de 100 minutes.

On obtient ainsi une bouillie ou suspension de silice précipitée qui est ensuite filtrée et lavée au moyen d'un filtre presse à plateaux verticaux, lesdits plateaux étant équipés de membrane déformable permettant de comprimer le gâteau de filtration par introduction d'air sous pression ; la bouillie de silice précipitée est tout d'abord filtrée, la pression en fin de filtration étant de 5,6 bars ; le gâteau formé est ensuite lavé à l'eau, puis est compacté par introduction d'air à la pression de 6,4 bars pendant 2 minutes.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,28 %). Après cette opération de délitage, la bouillie résultante, de pH égal à 6,2 et de perte au feu égale à 82,0 % (donc un taux de matière sèche de 18,0 % en poids), est atomisée au moyen d'un atomiseur à buses.

Les caractéristiques de la silice obtenue A1 sous forme de billes sensiblement sphériques sont alors les suivantes :
- surface spécifique BET 240 m²/g
- surface spécifique CTAB 200 m²/g
- volume poreux V1 représenté
   par les pores de d ≤ 400 Å 1,03 cm³/g
- volume poreux V2 représenté
   par les pores 175 Å ≤ d ≤ 275 Å 0,31 cm³/g
- rapport V2/V1 30 %
- volume poreux (V_{d1}) constitué
   par les pores de d < 1 µm 1,64 cm³/g
- indice de finesse (I.F.) 76 Å
- volume poreux V3 représenté
   par les pores 100 Å ≤ d ≤ 300 Å 0,85 cm³/g
- volume poreux total (VPT) 3,16 cm³/g
- DRT 0,33
- prise d'huile DOP 256 ml/100g
- pH 6,6
- taille moyenne des particules 220 µm

On soumet la silice A1 au test de dispersibilité tel que défini auparavant dans la description : elle présente un taux de fines (τ_{f}), c'est-à-dire une proportion de particules de taille inférieure à 0,3 µm, après désagglomération aux ultra-sons, de 30 %.

On soumet la silice A1 au test de désagglomération tel que défini précédemment dans la description : après désagglomération aux ultra-sons, elle présente un diamètre médian (⌀₅₀) de 12,0 µm et un facteur de désagglomération aux ultra-sons (F_{D}) de 3,0 ml.

### EXEMPLE 2 (comparatif)

Dans un réacteur en acier inoxydable muni d'un système d'agitation par hélices et d'un chauffage par double enveloppe, on introduit :
- 280 litres de silicate de sodium aqueux (65 °C), présentant un rapport pondéral SiO₂/Na₂O égal à 3,45 et une densité à 20 °C égal à 1,230
- 720 litres de solution aqueuse (20 °C) contenant 16,5 kg de Na₂SO₄.

La concentration en silicate exprimée en SiO₂ dans le pied de cuve initial est alors de 65 g/l. Le mélange est alors porté à une température de 70 °C tout en le maintenant sous agitation. On y introduit alors, à un débit de 7,7 l/min d'acide sulfurique dilué de densité à 20 °C égale à 1,050 jusqu'à obtenir dans le milieu réactionnel une valeur de pH (mesurée à sa température) égale à 8,0. La température de la réaction est de 70 °C pendant les 25 premières minutes ; elle est ensuite portée de 70 à 94 °C en 10 minutes environ, puis maintenue à 94 °C jusqu'à la fin de la réaction.

On introduit ensuite (c'est-à-dire lorsque le pH du milieu réactionnel a atteint la valeur de 8,0) conjointement dans le milieu réactionnel du silicate de sodium aqueux du type décrit ci-avant, à un débit de 2,1 l/min, et de l'acide sulfurique, également du type décrit ci-avant, à un débit régulé de manière telle que le pH du milieu réactionnel, pendant la période d'introduction, soit constamment égal à 8,0 ± 0,1. Après 40 minutes d'addition simultanée, on arrête l'introduction du silicate de sodium et on continue à introduire de l'acide dilué pendant 10 minutes environ de manière à amener le pH du milieu réactionnel à une valeur égale à 5,2. Après cette introduction d'acide, on maintient la bouillie réactionnelle obtenue pendant 5 minutes sous agitation.

La durée totale de la réaction est de 100 minutes.

On obtient ainsi une bouillie ou suspension de silice précipitée qui est ensuite filtrée et lavée au moyen d'un filtre presse à plateaux verticaux, lesdits plateaux étant équipés de membrane déformable permettant de comprimer le gâteau de filtration par introduction d'air sous pression ; la bouillie de silice précipitée est tout d'abord filtrée, la pression en fin de filtration étant de 5,6 bars ; le gâteau formé est ensuite lavé à l'eau, puis est compacté par introduction d'air à la pression de 6,6 bars pendant 2 minutes.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,28 %). Après cette opération de délitage, la bouillie résultante, de pH égal à 6,2 et de perte au feu égale à 82,0 % (donc un taux de matière sèche de 18,0 % en poids), est atomisée au moyen d'un atomiseur à buses.

Les caractéristiques de la silice obtenue A2 sous forme de billes sensiblement sphériques sont alors les suivantes :
- surface spécifique BET 214 m²/g
- surface spécifique CTAB 190 m²/g
- volume poreux V1 représenté
   par les pores de d ≤ 400 Å 1,01 cm³/g
- volume poreux V2 représenté
   par les pores 175 Å ≤ d ≤ 275 Å 0,46 cm³/g
- rapport V2/V1 46%
- volume poreux (V_{d1}) constitué
   par les pores de d < 1 µm 1,68 cm³/g
- indice de finesse (I.F.) 91 Å
- volume poreux V3 représenté
   par les pores 100 Å ≤ d ≤ 300 Å 0,85 cm³/g
- volume poreux total (VPT) 3,11 cm³/g
- DRT 0,32
- prise d'huile DOP 256 ml/100g
- pH 6,6
- taille moyenne des particules 215 µm

On soumet la silice A2 au test de dispersibilité tel que défini auparavant dans la description : elle présente un taux de fines (τ_{f}), c'est-à-dire une proportion de particules de taille inférieure à 0,3 µm, après désagglomération aux ultra-sons, de 42 %.

On soumet la silice A2 au test de désagglomération tel que défini précédemment dans la description: après désagglomération aux ultra-sons, elle présente un diamètre médian (⌀₅₀) de 9,0 µm et un facteur de désagglomération aux ultra-sons (F_{D}) de 4,5 ml.

### EXEMPLE 3

Dans un réacteur en acier inoxydable muni d'un système d'agitation par hélices et d'un chauffage par double enveloppe, on introduit :
- 275 litres de silicate de sodium aqueux (65 °C), présentant un rapport pondéral SiO₂/Na₂O égal à 3,45 et une densité à 20 °C égal à 1,230
- 825 litres de solution aqueuse (20 °C) contenant 18,2 kg de Na₂SO₄.

La concentration en silicate exprimée en SiO₂ dans le pied de cuve initial est alors de 58 g/l. Le mélange est alors porté à une température de 74 °C tout en le maintenant sous agitation. On y introduit alors, à un débit de 7,6 l/min d'acide sulfurique dilué de densité à 20 °C égale à 1,050 jusqu'à obtenir dans le milieu réactionnel une valeur de pH (mesurée à sa température) égale à 7,7. La température de la réaction est de 74 °C pendant les 25 premières minutes ; elle est ensuite portée de 74 à 94 °C en 10 minutes environ, puis maintenue à 94 °C jusqu'à la fin de la réaction.

On introduit ensuite (c'est-à-dire lorsque le pH du milieu réactionnel a atteint la valeur de 7,7) conjointement dans le milieu réactionnel du silicate de sodium aqueux du type décrit ci-avant, à un débit de 2,1 l/min, et de l'acide sulfurique, également du type décrit ci-avant, à un débit régulé de manière telle que le pH du milieu réactionnel, pendant la période d'introduction, soit constamment égal à 7,7 ± 0,1. Après 40 minutes d'addition simultanée, on arrête l'introduction du silicate de sodium et on continue à introduire de l'acide dilué pendant 10 minutes environ de manière à amener le pH du milieu réactionnel à une valeur égale à 5,2. Après cette introduction d'acide, on maintient la bouillie réactionnelle obtenue pendant 5 minutes sous agitation.

La durée totale de la réaction est de 98 minutes.

On obtient ainsi une bouillie ou suspension de silice précipitée qui est ensuite filtrée et lavée au moyen d'un filtre presse à plateaux verticaux, lesdits plateaux étant équipés de membrane déformable permettant de comprimer le gâteau de fittration par introduction d'air sous pression ; la bouillie de silice précipitée est tout d'abord filtrée, la pression en fin de filtration étant de 5,6 bars ; le gâteau formé est ensuite lavé à l'eau, puis est compacté par introduction d'air à la pression de 4 bars pendant 30 secondes.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,28 %). Après cette opération de délitage, la bouillie résultante, de pH égal à 6,2 et de perte au feu égale à 83,7 % (donc un taux de matière sèche de 16,3 % en poids), est atomisée au moyen d'un atomiseur à buses.

Les caractéristiques de la silice obtenue P1 sous forrne de billes sensiblement sphériques sont alors les suivantes :
- surface spécifique BET 216 m²/g
- surface spécifique CTAB 192 m²/g
- volume poreux V1 représenté
   par les pores de d ≤ 400 Å 0,97 cm³/g
- volume poreux V2 représenté
   par les pores 175 Å ≤ d ≤ 275 Å 0,34 cm³/g
- rapport V2/V1 35 %
- volume poreux (V_{d1}) constitué
   par les pores de d < 1 µm 1,73 cm³/g
- indice de finesse (I.F.) 87 Å
- volume poreux V3 représenté
   par les pores 100 Å ≤ d ≤ 300 Å 0,86 cm³/g
- volume poreux total (VPT) 3,15 cm³/g
- DRT 0,30
- prise d'huile DOP 295 ml/100g
- pH 6,6
- taille moyenne des particules 190 µm

On soumet la silice P1 au test de dispersibilité tel que défini auparavant dans la description : elle présente un taux de fines (τ_{f}), c'est-à-dire une proportion de particules de taille inférieure à 0,3 µm, après désagglomération aux ultra-sons, de 57 %.

On soumet la silice P1 au test de désagglomération tel que défini précédemment dans la description : après désagglomération aux ultra-sons, elle présente un diamètre médian (⌀₅₀) de 5,2 µm et un facteur de désagglomération aux ultra-sons (F_{D}) de 14,4 ml.

### EXEMPLE 4

Dans un réacteur en acier inoxydable muni d'un système d'agitation par hélices et d'un chauffage par double enveloppe, on introduit :
- 275 litres de silicate de sodium aqueux (65 °C), présentant un rapport pondéral SiO₂/Na₂O égal à 3,45 et une densité à 20 °C égal à 1,230
- 825 litres de solution aqueuse (20 °C) contenant 18,2 kg de Na₂SO₄.

La concentration en silicate exprimée en SiO₂ dans le pied de cuve initial est alors de 58 g/l. Le mélange est alors porté à une température de 75 °C tout en le maintenant sous agitation. On y introduit alors, à un débit de 7,6 l/min d'acide sulfurique dilué de densité à 20 °C égale à 1,050 jusqu'à obtenir dans le milieu réactionnel une valeur de pH (mesurée à sa température) égale à 7,7. La température de la réaction est de 75 °C pendant les 25 premières minutes ; elle est ensuite portée de 75 à 94 °C en 10 minutes environ, puis maintenue à 94 °C jusqu'à la fin de la réaction.

On introduit ensuite (c'est-à-dire lorsque le pH du milieu réactionnel a atteint la valeur de 7,7) conjointement dans le milieu réactionnel du silicate de sodium aqueux du type décrit ci-avant, à un débit de 2,1 l/min, et de l'acide sulfurique, également'du type décrit ci-avant, à un débit régulé de manière telle que le pH du milieu réactionnel, pendant la période d'introduction, soit constamment égal à 7,7 ± 0,1. Après 40 minutes d'addition simultanée, on arrête l'introduction du silicate de sodium et on continue à introduire de l'acide dilué pendant 10 minutes environ de manière à amener le pH du milieu réactionnel à une valeur égale à 5,2. Après cette introduction d'acide, on maintient la bouillie réactionnelle obtenue pendant 5 minutes sous agitation.

La durée totale de la réaction est de 98 minutes.

On obtient ainsi une bouillie ou suspension de silice précipitée qui est ensuite filtrée et lavée au moyen d'un filtre presse à plateaux verticaux, lesdits plateaux étant équipés de membrane déformable permettant de comprimer le gâteau de filtration par introduction d'air sous pression ; la bouillie de silice précipitée est tout d'abord filtrée, la pression en fin de filtration étant de 4 bars ; le gâteau formé est ensuite lavé à l'eau, puis est compacté par introduction d'air à la pression de 4 bars pendant 30 secondes.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,28 %). Après cette opération de délitage, la bouillie résultante, de pH égal à 6,2 et de perte au feu égale à 83,7 % (donc un taux de matière sèche de 16,3 % en poids), est atomisée au moyen d'un atomiseur à buses.

Les caractéristiques de la silice obtenue P2 sous forme de billes sensiblement sphériques sont alors les suivantes :
- surface spécifique BET 200 m²/g
- surface spécifique CTAB 190 m²/g
- volume poreux V1 représenté
   par les pores de d ≤ 400 Å 1,03 cm³/g
- volume poreux V2 représenté
   par les pores 175 Å ≤ d ≤ 275 Å 0,49 cm³/g
- rapport V2/V1 48 %
- volume poreux (V_{d1}) constitué
   par les pores de d < 1 µm 1,80 cm³/g
- indice de finesse (I.F.) 93 Å
- volume poreux V3 représenté
   par les pores 100 Å ≤ d ≤ 300 Å 0,87 cm³/g
- volume poreux total (VPT) 3,32 cm³/g
- DRT 0,31
- prise d'huile DOP 280 ml/100g
- pH 6,6
- taille moyenne des particules 210 µm

On soumet la silice P2 au test de dispersibilité tel que défini auparavant dans la description : elle présente un taux de fines (τ_{f}), c'est-à-dire une proportion de particules de taille inférieure à 0,3 µm, après désagglomération aux ultra-sons, de 62 %.

On soumet la silice P2 au test de désagglomération tel que défini précédemment dans la description : après désagglomération aux ultra-sons, elle présente un diamètre médian (⌀₅₀) de 5,4 µm et un facteur de désagglomération aux ultra-sons (F_{D}) de 10,0 ml.

### EXEMPLE 5

Dans un réacteur en acier inoxydable muni d'un système d'agitation par hélices et d'un chauffage par double enveloppe, on introduit :
- 262 litres de silicate de sodium aqueux (65 °C), présentant un rapport pondéral SiO₂/Na₂O égal à 3,45 et une densité à 20 °C égal à 1,230
- 858 litres de solution aqueuse (20 °C) contenant 18,7 kg de Na₂SO₄.

La concentration en silicate exprimée en SiO₂ dans le pied de cuve initial est alors de 55 g/l. Le mélange est alors porté à une température de 75 °C tout en le maintenant sous agitation. On y introduit alors, à un débit de 7,25 l/min d'acide sulfurique dilué de densité à 20 °C égale à 1,050 jusqu'à obtenir dans le milieu réactionnel une valeur de pH (mesurée à sa température) égale à 7,7. La température de la réaction est de 75 °C pendant les 25 premières minutes ; elle est ensuite portée de 75 à 94 °C en 10 minutes environ, puis maintenue à 94 °C jusqu'à la fin de la réaction.

On introduit ensuite (c'est-à-dire lorsque le pH du milieu réactionnel a atteint la valeur de 7,7) conjointement dans le milieu réactionnel du silicate de sodium aqueux du type décrit ci-avant, à un débit de 1,9 l/min, et de l'acide sulfurique, également du type décrit ci-avant, à un débit régulé de manière telle que le pH du milieu réactionnel, pendant la période d'introduction, soit constamment égal à 7,7 ± 0,1. Après 40 minutes d'addition simultanée, on arrête l'introduction du silicate de sodium et on continue à introduire de l'acide dilué pendant 10 minutes environ de manière à amener le pH du milieu réactionnel à une valeur égale à 5,2. Après cette introduction d'acide, on maintient la bouillie réactionnelle obtenue pendant 5 minutes sous agitation.

La durée totale de la réaction est de 101 minutes.

On obtient ainsi une bouillie ou suspension de silice précipitée qui est ensuite filtrée et lavée au moyen d'un filtre presse à plateaux verticaux, lesdits plateaux étant équipés de membrane déformable permettant de comprimer le gâteau de filtration par introduction d'air sous pression ; la bouillie de silice précipitée est tout d'abord filtrée, la pression en fin de filtration étant de 5,6 bars ; le gâteau formé est ensuite lavé à l'eau, puis est compacté par introduction d'air à la pression de 4 bars pendant 30 secondes.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,28 %). Après cette opération de délitage, la bouillie résultante, de pH égal à 6,2 et de perte au feu égale à 83,5 % (donc un taux de matière sèche de 16,5 % en poids), est atomisée au moyen d'un atomiseur à buses.

Les caractéristiques de la silice obtenue P3 sous forme de billes sensiblement sphériques sont alors les suivantes :
- surface spécifique BET 215 m²/g
- surface spécifique CTAB 197 m²/g
- volume poreux V1 représenté
   par les pores de d ≤ 400 Å 1,02 cm³/g
- volume poreux V2 représenté
   par les pores 175 Å ≤ d ≤ 275 Å 0,27 cm³/g
- rapport V2/V1 26 %
- volume poreux (V_{d1}) constitué
   par les pores de d < 1 µm 1,72 cm³/g
- indice de finesse (I.F.) 83 Å
- volume poreux V3 représenté
   par les pores 100 Å ≤ d ≤ 300 Å 0,86 cm³/g
- volume poreux total (VPT) 3,14 cm³/g
- DRT 0,30
- prise d'huile DOP 285 ml/100g
- pH 6,6
- taille moyenne des particules 210 µm

On soumet la silice P3 au test de dispersibilité tel que défini auparavant dans la description : elle présente un taux de fines (τ_{f}), c'est-à-dire une proportion de particules de taille inférieure à 0,3 µm, après désagglomération aux ultra-sons, de 55 %.

On soumet la silice P3 au test de désagglomération tel que défini précédemment dans la description.

Après désagglomération aux ultra-sons, elle présente un diamètre médian (⌀₅₀) de 6,4 µm et un facteur de désagglomération aux ultra-sons (F_{D}) de 9,1 ml.

Les caractéristiques des silices préparées dans les exemples précédents 1 à 5, ainsi que celles d'une silice commerciale, sous forme de poudre et granulés, vendue par la Société PPG INDUSTRIES, en l'occurrence la HI-SIL® 2000 (référencée A3), et celles de la silice (référencée MP1), sous forme de billes sensiblement sphériques, préparée dans l'exemple 12 de la demande de brevet EP-A-0520862 (n° de dépôt 92401677.7), sont rassemblées dans le tableau I ci-dessous.

**TABLEAU I**

| | A1 | A2 | A3 | MP1 | P1 | P2 | P3 |
|---|---|---|---|---|---|---|---|
| S_{BET}(m²/g) | 240 | 214 | 239 | 170 | 216 | 200 | 215 |
| S_{CTAB}(m²/g) | 200 | 190 | 212 | 160 | 192 | 190 | 197 |
| V1 (cm³/g) | 1,03 | 1,01 | 1,07 | 0,90 | 0,97 | 1,03 | 1,02 |
| V2 (cm³/g) | 0,31 | 0,46 | 0,20 | 0,55 | 0,34 | 0,49 | 0,27 |
| V2/V1 (%) | 30 | 46 | 19 | 61 | 35 | 48 | 26 |
| Vd1 (cm³/g) | 1,64 | 1,68 | 1,93 | 1,80 | 1,73 | 1,80 | 1,72 |
| I.F. (Å) | 76 | 91 | 76 | 120 | 87 | 93 | 83 |
| τ_{f}(%) | 30 | 44 | 29 | 78 | 57 | 56 | 55 |
| V3 (cm³/g) | 0,85 | 0,85 | 0,88 | 0,77 | 0,86 | 0,87 | 0,86 |
| VPT (cm³/g) | 3,16 | 3,11 | 2,70 | 3,00 | 3,15 | 3,32 | 3,14 |
| DRT | 0,33 | 0,32 | 0,32 | 0,28 | 0,30 | 0,31 | 0,30 |
| DOP (ml/100g) | 256 | 256 | 295 | 276 | 295 | 280 | 285 |
| pH | 6,6 | 6,6 | 6,8 | 6,7 | 6,6 | 6,6 | 6,6 |
| Taille moy. (µm) | 220 | 215 | * | 260 | 190 | 210 | 210 |
| Ø₅₀ (µm) | 12,0 | 9,0 | 12,9 | 4,3 | 5,2 | 10,0 | 6,4 |
| F_{O} (ml) | 3,0 | 4,5 | 2,0 | 6,5 | 14,4 | 5,4 | 9,1 |

| | | | | | | | |
|---|---|---|---|---|---|---|---|
| ***** non mesurée | | | | | | | |

### EXEMPLE 6

Cet exemple illustre l'utilisation et le comportement de silices selon l'invention et de silices non conformes à l'invention dans une formulation pour caoutchouc industriel.

On utilise la formulation suivante (les parties sont exprimées en poids) :
- Caoutchouc S.B.R. ⁽¹⁾ 103
- Caoutchouc B.R. 1220 ⁽²⁾ 25
- Silice 70 (80 dans le cas de MP1)
- ZnO ⁽³⁾ 2,5
- Acide stéarique 2
- 6PPD ⁽⁴⁾ 1,9
- CBS ⁽⁵⁾ 1,7
- DPG ⁽⁶⁾ 2
- Soufre ⁽⁷⁾ 1,4
- Silane X50S ⁽⁸⁾ 12,8

(1) Copolymère styrène butadiène en solution type BUNA 1955S25 commercialisé par la Société BAYER
(2) Polymère polybutadiène type B.R. 1220 commercialisé par la Société SHELL
(3) Oxyde de zinc qualité caoutchouc
(4) N-(diméthyl-1,3 butyl)-N'-phényl-p-phénylène diamine commercialisé par la Société AKZO
(5) N-cyclohexyl 2-benzothiazyl sulfénamide
(6) Diphényl guanidine
(7) Agent vulcanisant
(8) Agent de couplage silice/caoutchouc, sur support noir de carbone, commercialisé par la Société DEGUSSA

Les formulations sont préparées de la manière suivante, en deux phases :

### Phase 1

Dans un mélangeur interne (type BANBURY), on introduit dans cet ordre et aux temps indiqués entre parenthèses (la température montant progressivement de 60 à 160°C):
- du S.B.R. et du B.R.1220 (t₀)(60 °C),
- les 2/3 de la quantité de silice et le X50S (t₀ + 1 mn),
- le reste (1/3) de la silice et l'acide stéarique (t₀ + 2 mn).

La décharge du mélangeur (tombée du mélange) se fait quand la température de la chambre atteint 160 °C.

### Phase 2

Le mélange obtenu à l'issue de la phase 1 est réintroduit dans le mélangeur interne (t₀') à 60 °C (la température montant ensuite progressivement).

On introduit ensuite le ZnO actif et le 6PPD (t₀' + 30 s).

La décharge du mélangeur (tombée du mélange) se fait quand la température de la chambre atteint 160 °C. Le mélange est alors introduit sur un mélangeur à cylindres, maintenus à 40 °C, pour y être calandré. Sur ce mélangeur, on introduit le CBS, le DPG et le soufre.

Après homogénéisation et trois passages au fin, le mélange final est calandré sous la forme de feuilles de 2,5 à 3 mm d'épaisseur.

Les résultats des essais sont les suivants :

### 1- Propriétés rhéologiques

Les mesures sont réalisées sur les formulations à l'état cru à 170 °C.

L'appareillage utilisé pour conduire les mesures est un rhéomètre MONSANTO 100 S.

Les résultats sont reportés dans le tableau II ci-dessous.

**TABLEAU II**

| | A1 | A2 | A3 | MP1 | P1 | P2 | P3 |
|---|---|---|---|---|---|---|---|
| Couple mini (In.lb) | 27 | 25 | 32 | 18 | 21 | 19 | 21 |
| Couple maxi (In.lb) | 85 | 82 | 84 | 76 | 78 | 77 | 80 |

Les formulations obtenues à partir des silices selon l'invention (P1, P2, P3) conduisent:
- à des valeurs plus faibles que celles des formulations préparées à partir des silices A1, A2 et A3,
- à des valeurs peu éloignées de celles de la formulation obtenue à partir de la silice MP1.

Ceci traduit une grande facilité de mise en oeuvre des mélanges préparés à partir des silices selon l'invention, en particulier au niveau des opérations d'extrusion et de calandrages souvent réalisées lors de la confection de compositions élastomériques (moindre dépense d'énergie pour mettre en oeuvre le mélange, plus grande facilité d'injection lors du mélangeage, moindre gonflement en filière lors de l'extrusion, moindre retrait au calandrage,...).

### 2- Propriétés mécaniques

Les mesures sont réalisées sur les formulations vulcanisées.

La vulcanisation est obtenue en portant les formulations à 150 °C pendant 40 minutes.

Les normes suivantes ont été utilisées :
(i) essais de traction (modules, résistance à la rupture)
   NF T 46-002 ou ISO 37-1977 (DIN 53 504)
(ii) essais de résistance au déchirement
   NF T 46-007 (entaillée à 0,5 mm)

Les résultats obtenus sont consignés dans le tableau III ci-dessous.

**TABLEAU III**

| | A1 | A2 | A3 | MP1 | P1 | P2 | P3 |
|---|---|---|---|---|---|---|---|
| Module 100 % (MPa) | 4,8 | 4,5 | 3,9 | 3,0 | 3,3 | 3,0 | 3,2 |
| Module 300 % (MPa) | 12,5 | 13,5 | 12,4 | 14,7 | 14,5 | 13,7 | 13,8 |
| Module 300 % / Module 100 % | 2,6 | 3,0 | 3,2 | 4,7 | 4,4 | 4,6 | 4,3 |
| Résistance rupture (MPa) | 13,0 | 17,5 | 17,1 | 19,4 | 19,5 | 20,2 | 19,6 |
| Résistance déchirement (kN/M) | 33,0 | 32,7 | 30,5 | 36,7 | 41,1 | 42,6 | 37,3 |

Ces derniers résultats montrent que les silices selon l'invention procurent de très bonnes propriétés mécaniques.

D'une part, les silices selon l'invention conduisent à des modules 100 % faibles, preuve d'une bonne dispersion de la silice, et à des modules 300 % assez élevés, preuve d'une grande densité d'interactions silice/caoutchouc. De plus, elles conduisent à un rapport module 300 % / module 100 % important, c'est-à-dire à un très bon compromis entre ces deux modules, preuve d'un bon effet de renforcement.

D'autre part, le haut pouvoir renforçant des silices selon l'invention est aussi confirmé par les valeurs élevées obtenues pour la résistance à la rupture et la résistance au déchirement.

Les silices selon l'invention confèrent ainsi un meilleur niveau de performances sur l'ensemble des propriétés mécaniques.

### 3- Propriétés dynamiques

Les mesures sont réalisées sur les formulations vulcanisées.

La vulcanisation est obtenue en portant les formulations à 150 °C pendant 40 minutes. Les résultats (illustrant la tendance à l'échauffement) sont reportés dans le tableau IV ci-dessous (plus les valeurs sont faibles, moindre est la tendance à l'échauffement). On a indiqué l'appareillage utilisé pour conduire les mesures.

**TABLEAU IV**

| | A1 | A2 | A3 | MP1 | P1 | P2 | P3 |
|---|---|---|---|---|---|---|---|
| Echauffement interne (°C)⁽¹⁾ | 111 | 92 | 101 | 84 | 89 | 84 | 88 |
| Tangente delta 70 °C ⁽²⁾ | 0,14 | 0,14 | 0,16 | 0,14 | 0,13 | 0,13 | 0,13 |

| | | | | | | | |
|---|---|---|---|---|---|---|---|
| (1) Flexomètre GOODRICH | | | | | | | |
| (2) Visco-élasticimètre INSTRON | | | | | | | |

La tendance à l'échauffement obtenu à partir des silices selon l'invention est assez faible.

Elle est notamment inférieure à celle observée avec les silices A1, A2 et A3 qui ont une surface spécifique du même ordre.

Elle est voisine de celle observée avec la silice MP1 qui présente une surface spécifique bien moins élevée ; la tangente delta est même inférieure à celle observée avec cette dernière.

## Revendications

1. Silice précipitée **caractérisée en ce qu'**elle possède :
- une surface spécifique BET comprise entre 185 et 250 m²/g,
- une surface spécifique CTAB comprise entre 180 et 240 m²/g,
- une distribution poreuse telle que le volume poreux V2 constitué par les pores dont le diamètre est compris entre 175 et 275 Å représente moins de 50 % du volume poreux V1 constitué par les pores de diamètres inférieurs ou égaux à 400 Å,
- un volume poreux (V_{d1}) constitué par les pores de diamètre inférieur à 1 µm supérieur à 1,65 cm³/g,
- un indice de finesse (I.F.) compris entre 70 et 100 Å,
- un taux de fines (τ_{f}), après désagglomération aux ultra-sons, d'au moins 50 %.

2. Silice selon la revendication 1, **caractérisée en ce qu'**elle possède une distribution poreuse telle que le rapport V2/V1 est d'au plus 0,45.

3. Silice selon l'une des revendications 1 et 2, **caractérisée en ce qu'**elle présente un volume poreux (V_{d1}) constitué par les pores de diamètre inférieur à 1 µm d'au moins 1,70 cm³/g, de préférence compris entre 1,70 et 1,80 cm³/g.

4. Silice selon l'une des revendications 1 à 3, **caractérisée en ce qu'**elle présente un indice de finesse (I.F.) compris entre 80 et 100 Å.

5. Silice selon l'une des revendications 1 à 4, **caractérisée en ce qu'**elle présente un diamètre médian (⌀₅₀), après désagglomération aux ultra-sons, inférieur à 8,5 µm, de préférence compris entre 5 et 7 µm.

6. Silice selon l'une des revendications 1 à 5, **caractérisée en ce qu'**elle possède un facteur de désagglomération aux ultra-sons (F_{D}) supérieur à 5,5 ml, de préférence supérieur à 9 ml.

7. Silice selon l'une des revendications 1 à 6, **caractérisée en ce qu'**elle possède un volume poreux (V3) constitué par les pores dont le diamètre est compris entre 100 et 300 Å d'au moins 0,82 cm³/g, en particulier d'au moins 0,85 cm³/g.

8. Silice selon l'une des revendications 1 à 7, **caractérisée en ce qu'**elle possède un volume poreux total (VPT) supérieur à 3,0 cm³/g, par exemple compris entre 3,1 et 3,4 cm³/g.

9. Silice selon l'une des revendication 1 à 8, **caractérisée en ce qu'**elle présente une densité de remplissage à l'état tassé (DRT) supérieurs à 0,28, en particulier au moins égale à 0,30.

10. Silice selon l'une des revendications 1 à 9, **caractérisée en ce qu'**elle possède une prise d'huile DOP comprise entre 230 et 330 ml/100 g, de préférence entre 250 et 300 ml/100g.

11. Silice selon l'une des revendications 1 à 10, **caractérisée en ce qu'**elle se présente sous forme de billes sensiblement sphériques de taille moyenne d'au moins 80 µm.

12. Silice selon l'une des revendications 1 à 10, **caractérisée en ce qu'**elle se présente sous forme de poudre de taille moyenne d'au moins 15 µm.

13. Silice selon l'une des revendications 1 à 10, **caractérisée en ce qu'**elle se présente sous forme de granulés de taille d'au moins 1 mm.

14. Utilisation comme charge renforçante pour élastomères d'une silice selon l'une des revendications 1 à 13.

## Patentansprüche

1. Ausgefälltes Silica, **dadurch gekennzeichnet, dass** es die folgenden Eigenschaften besitzt:
- eine spezifische BET-Oberfläche, die zwischen 185 und 250 m²/g liegt,
- eine spezifische CTAB-Oberfläche, die zwischen 180 und 240 m²/g liegt,
- eine Porenverteilung, die derart ist, dass das Porenvolumen V2, welches durch die Poren mit einem Durchmesser zwischen 175 und 275 Å gebildet wird, wenigstens 50 % des Porenvolumens V1 darstellt, das durch die Poren mit Durchmessern, die kleiner oder gleich 400 Å sind, gebildet wird,
- ein Porenvolumen (V_{d1}), welches durch die Poren mit einem Durchmesser kleiner 1 µm gebildet wird, über 1,65 cm³/g,
- einen Feinheitsindex (I.F.), der zwischen 70 und 100 Å liegt,
- einen Anteil von Feinstteilchen (τ_{f}) nach Disaggregation mittels Ultraschall, von wenigstens 50 %.

2. Silica nach Anspruch 1, **dadurch gekennzeichnet, dass** es eine solche Porenverteilung besitzt, dass das Verhältnis V2/V1 höchstens 0,45 beträgt.

3. Silica nach einem der Ansprüche 1 und 2, **dadurch gekennzeichnet, dass** dieses ein Porenvolumen (V_{d1}), gebildet durch die Poren mit einem Durchmesser kleiner 1 µm, von wenigstens 1,70 cm³/g, vorzugsweise zwischen 1,70 und 1,80 cm³/g, aufweist.

4. Silica nach einem der Ansprüche 1 bis 3, **dadurch gekennzeichnet, dass** dieses einen Feinheitsindex (I.F.) aufweist, der zwischen 80 und 100 Å liegt.

5. Silica nach einem der Ansprüche 1 bis 4, **dadurch gekennzeichnet, dass** dieses einen mittleren Durchmesser (Ø₅₀), nach Disaggregation mittels Ultraschall, von kleiner als 8,5 µm, vorzugsweise zwischen 5 und 7 µm, aufweist.

6. Silica nach einem der Ansprüche 1 bis 5, **dadurch gekennzeichnet, dass** dieses einen Ultraschalldisaggregationsfaktor (F_{D}) über 5,5 ml, vorzugsweise über 9 ml, aufweist.

7. Silica nach einem der Ansprüche 1 bis 6, **dadurch gekennzeichnet, dass** dieses ein Porenvolumen (V3), gebildet durch die Poren, deren Durchmesser zwischen 100 und 300 Å liegt, von wenigstens 0,82 cm³/g, insbesondere wenigstens 0,85 cm³/g, besitzt.

8. Silica nach einem der Ansprüche 1 bis 7, **dadurch gekennzeichnet, dass** dieses ein Gesamtporenvolumen (VPT) aufweist, das größer ist als 3,0 cm³/g und beispielsweise zwischen 3,1 und 3,4 cm³/g liegt.

9. Silica nach einem der Ansprüche 1 bis 8, **dadurch gekennzeichnet, dass** dieses eine Fülldichte im zusammengedrückten Zustand (DRT), welche höher ist als 0,28 und insbesondere wenigstens gleich 0,30 ist, aufweist.

10. Silica nach einem der Ansprüche 1 bis 9, **dadurch gekennzeichnet, dass** dieses eine Ölzahl DOP aufweist, die zwischen 230 und 330 ml/100 g, vorzugsweise zwischen 250 und 300 ml/100 g, liegt.

11. Silica nach einem der Ansprüche 1 bis 10, **dadurch gekennzeichnet, dass** dieses in Form von im Wesentlichen kugelförmigen Kügelchen mit einer mittleren Größe von wenigstens 80 µm vorliegt.

12. Silica nach einem der Ansprüche 1 bis 10, **dadurch gekennzeichnet, dass** dieses in Form eines Pulvers mit einer mittleren Größe von wenigstens 15 µm vorliegt.

13. Silica nach einem der Ansprüche 1 bis 10, **dadurch gekennzeichnet, dass** dieses in Form von Granalien mit einer Größe von wenigstens 1 mm vorliegt.

14. Verwendung eines Silica nach einem der Ansprüche 1 bis 13 als verstärkenden Füllstoff für Elastomere.

## Claims

1. Precipitated silica, **characterized in that** it has:
- a BET specific surface of between 185 and 250 m²/g,
- a CTAB specific surface of between 180 and 240 m²/g,
- a pore distribution such that the pore volume V2 made up of the pores with a diameter of between 175 and 275 A represents less than 50% of the pore volume V1 made up of the pores with diameters of less than or equal to 400 Å,
- a pore volume (V_{d1}), made up of the pores with a diameter of less than 1 µm, of greater than 1.65 cm³/g_{,}
- a fineness value (F.V.) of between 70 and 100 Å,
- a content of fines (τ_{f}), after deagglomeration with ultrasound, of at least 50%.

2. Silica according to claim 1, **characterized in that** it has a pore distribution such that the ratio V2/V1 is not more than 0.45.

3. Silica according to either of claims 1 and 2, **characterized in that** it has a pore volume (V_{d1}), made up of the pores with a diameter of less than 1 µm, of at least 1.70 cm³/g, preferably between 1.70 and 1.80 cm³/g.

4. Silica according to one of claims 1 to 3, **characterized in that** it has a fineness value (F.V.) of between 80 and 100 Å.

5. Silica according to one of claims 1 to 4, **characterized in that** it has a median diameter (Ø₅₀), after deagglomeration with ultrasound, of less than 8.5 µm, preferably between 5 and 7 µm.

6. Silica according to one of claims 1 to 5, **characterized in that** it has an ultrasound deagglomeration factor (F_{D}) of greater than 5.5 ml, preferably greater than 9 ml.

7. Silica according to one of claims 1 to 6, **characterized in that** it has a pore volume (V3), made up of the pores with a diameter of between 100 and 300 Å, of at least 0.82 cm³/g, in particular of at least 0.85 cm³/g.

8. Silica according to one of claims 1 to 7, **characterized in that** it has a total pore volume (TPV) of greater than 3.0 cm³/g, for example between 3.1 and 3.4 cm³/g.

9. Silica according to one of claims 1 to 8, **characterized in that** it has a packed filling density (PFD) of greater than 0.28, in particular at least equal to 0.30.

10. Silica according to one of claims 1 to 9, **characterized in that** it has an oil absorption value DOP of between 230 and 330 ml/100 g, preferably between 250 and 300 ml/100g.

11. Silica according to one of claims 1 to 10, **characterized in that** it is in the form of substantially spherical beads with an average size of at least 80 µm.

12. Silica according to one of claims 1 to 10, **characterized in that** it is in the form of powder with an average size of at least 15 µm.

13. Silica according to one of claims 1 to 10, **characterized in that** it is in the form of granules at least 1 mm in size.

14. Use, as a reinforcing filler for elastomers, of a silica according to one of claims 1 to 13.
